# NEUE EUROPÄISCHE PATENTSCHRIFT

(11) **EP 1 121 324 B2**
(45) Veröffentlichungstag und Bekanntmachung des Hinweises auf die Entscheidung über den Einspruch: **25.07.2007**
(45) Hinweis auf die Patenterteilung: 17.12.2003
(21) Anmeldenummer: 99970371.3
(22) Anmeldetag: 05.10.1999
(51) Int. Cl.: B67D 5/02, B29C 73/16

(54) **ABDICHTVORRICHTUNG**
SEALING DEVICE
DISPOSITIF D'ETANCHEIFICATION

(30) Priorität: 08.10.1998 DE 19846451
(43) Veröffentlichungstag der Anmeldung: 08.08.2001
(73) Patentinhaber: Sumitomo Rubber Industries, Ltd., Kobe-shi, Hyogo-ken (JP)
(72) Erfinder: ECKHARDT, Arnold, D-63691 Randstadt (DE)
(74) Vertreter: Manitz, Finsterwald & Partner GbR
(86) Internationale Anmeldenummer: PCT/EP1999/007437
(87) Internationale Veröffentlichungsnummer: WO 2000/021875

(56) Entgegenhaltungen:
- EP-A- 0 557 913
- CA-A- 2 189 290
- DE-A- 4 437 981
- DE-A- 19 545 935
- DE-A- 19 652 546
- US-A- 1 363 920
- US-A- 3 374 927
- US-A- 3 515 181
- US-A- 3 908 871
- US-A- 4 216 885
- US-A- 4 582 233
- US-A- 5 584 411

## Beschreibung

Die Erfindung betrifft eine Entnahmeeinheit mit einem ein Abdichtmittel enthaltenden Behälter für eine Vorrichtung zum Abdichten aufblasbarer Gegenstände, insbesondere Reifen. Die Erfindung betrifft ferner eine eine derartige Entnahmeeinheit umfassende Abdicht vorrichtung mit einer Gasdruckquelle und mit einem ein Abdichtmittel enthaltenden Behälter, der einen an die Gasdruckquelle anschließbaren Gaseinlaß und einen mit einem abzudichtenden Gegenstand koppelbaren Auslaß aufweist, wobei der Gaseinlaß und der Auslaß über den Behälterinnenraum miteinander in Verbindung stehen. Eine Entnahmeeinheit nach dem Oberbegriff von Anspruch 1 ist aus der US 1363 920 bekannt.

Derartige Vorrichtungen sind bekannt (beispielsweise aus der DE 196 52 546 A1) und dienen dazu, ein Leck in dem aufblasbaren Gegenstand, beispielsweise in einem durchstochenen oder während der Fahrt beschädigten Reifen, dadurch abzudichten, daß ein spezielles Abdichtmittel über das Reifenventil in den Reifen eingebracht und der Reifen anschließend zumindest auf einen Druck, bei dem er gefahren werden kann, aufgepumpt wird.

Entnahmeeinheiten zur Handhabung von Flüssigkeiten sind z.B. aus US 5,584,411, EP-A-0 557 913, DE-A-4 437 981 US 3,908,871 und US 3,374,927 bekannt.

Es ist das der Erfindung zugrundeliegende Problem (Aufgabe), eine Vorrichtung der eingangs genannten Art derart weiterzubilden, daß sie möglichst preiswert und vielseitig einsetzbar ist.

Die Lösung dieser Aufgabe erfolgt durch die Merkmale des auf die Entnahmeeinheit gerichteten Anspruchs 1 und durch die Merkmale des auf die Abdichtvorrichtung gerichteten Anspruchs 11.

Das erfindungsgemäße Vorsehen einer separaten Entnahmeeinheit ermöglicht es, den Behälter auszuwechseln, wenn das Abdichtmittel verbraucht oder verfallen ist, ohne daß die gesamte Abdichtvorrichtung erneuert werden muß. Des weiteren kann die wiederverwendbare Entnahmeeinheit mit Behältern unterschiedlicher Größe verwendet und die erfindungsgemäße Abdichtvorrichtung somit optimal an den jeweiligen aufblasbaren Gegenstand angepaßt werden.

Gemäß einem bevorzugten Ausführungsbeispiel der Erfindung weist die Entnahmeeinheit für den insbesondere flaschenförmigen Behälter, bevorzugt zur Aufnahme eines flaschenhalsartigen Anschlußabschnitts des Behälters, wenigstens einen im wesentlichen zylindrischen Anschlußstutzen auf.

Hierdurch können der Behälter und die Entnahmeeinheit in besonders einfacher Weise miteinander verbunden werden. Der Anschlußstutzen kann mit einem Innengewinde versehen werden, so daß der Behälter, insbesondere dessen mit einem entsprechenden Außengewinde versehener Anschlußabschnitt, einfach in den Anschlußstutzen geschraubt zu werden braucht.

Gemäß einer weiteren bevorzugten Ausführungsform der Erfindung verlaufen eine Einlaßleitung und eine Auslaßleitung jeweils im Bereich ihres mit dem Behälterinnenraum kommunizierenden freien Endes innerhalb eines Anschlußstutzens der Entnahmeeinheit, wobei sich die freien Enden der Einlaßleitung und der Auslaßleitung jeweils nicht über das freie Ende des Anschlußstutzens hinaus erstrecken.

Hierdurch kann die erfindungsgemäße Abdichtvorrichtung in zwei verschiedenen Betriebsstellungen verwendet werden. Bei auf dem Boden stehender Entnahmeeinheit und auf dem Kopf gestelltem, mit einer Öffnung nach unten an den Anschlußstutzen der Entnahmeeinheit gekoppeltem Behälter strömt das Gas über die Einlaßleitung in den Behälter hinein und - bei nicht vollständig gefülltem Behälter - durch das Abdichtmittel hindurch nach oben zum von der Entnahmeeinheit abgewandten Behälterboden. Der freie Raum oberhalb des Abdichtmittelspiegels wird dadurch unter Druck gesetzt, so daß das Abdichtmittel durch die Auslaßleitung hindurch in den abzudichtenden Gegenstand gedrückt wird.

Nachdem ein Teil des Abdichtmittels in den abzudichtenden Gegenstand eingebracht worden ist, kann die Abdichtvorrichtung umgedreht und mit der Entnahmeeinheit nach oben angeordnet werden. Das im Behälter verbliebene Abdichtmittel sammelt sich im Bereich des Behälterbodens, so daß die freien Enden der Einlaßleitung und der Auslaßleitung nunmehr freiliegen und nicht mehr in das Abdichtmittel eingetaucht sind. Das über die Einlaßleitung in den Behälter strömende Gas füllt nunmehr den freien Raum zwischen der Öffnung des Behälters und dem Abdichtmittelspiegel und kann somit direkt über die Auslaßleitung in den abzudichtenden Gegenstand strömen, wodurch dieser aufgepumpt wird.

Von besonderem Vorteil ist diese Vorgehensweise in Fällen, in denen mehrere Reifen eines Fahrzeugs oder mehrere Kammern einer Luftmatratze beschädigt sind. Nach dem Einbringen eines Teils des Abdichtmittels in z. B. den ersten abzudichtenden Reifen kann - wie vorstehend erläutert - durch Umdrehen der Abdichtvorrichtung der abgedichtete Reifen aufgepumpt werden, bevor die Reparatur mit dem nächsten beschädigten Reifen fortgesetzt wird. Das Abdichten und Aufpumpen mehrerer beschädigter Gegenstände hintereinander kann auf diese Weise besonders effizient durchgeführt werden.

Der Umstand, daß während des Einbringens des Abdichtmittels in den abzudichtenden Gegenstand das in den Behälter eintretende Gas durch das Abdichtmittel hindurchströmt, sorgt des weiteren in vorteilhafter Weise für eine Durchmischung des Abdichtmittels. Ein Schütteln der Abdichtvorrichtung oder des Behälters vor der Benutzung ist daher nicht erforderlich.

Wenn gemäß einem weiteren bevorzugten Ausführungsbeispiel der Erfindung der Behälter und die Entnahmeeinheit aus einem bevorzugt recyclingfähigen Kunststoff hergestellt sind, kann die Abdichtvorrichtung aufgrund ihres dann vergleichsweise geringen Eigengewichts leicht transportiert und insbesondere auch von körperlich schwachen Personen mühelos benutzt werden. Dies ist besonders vorteilhaft im Hinblick auf die vorstehend erläuterte Reparatur mehrerer beschädigter Gegenstände hintereinander, bei der die Abdichtvorrichtung mehrmals gedreht wird.

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine geschnittene Seitenansicht einer Abdichtvorrichtung gemäß einer Ausführungsform der Erfindung, und
- Fig. 2: die erfindungsgemäße Abdichtvorrichtung von Figur 1 in einer Anwendungsumgebung.

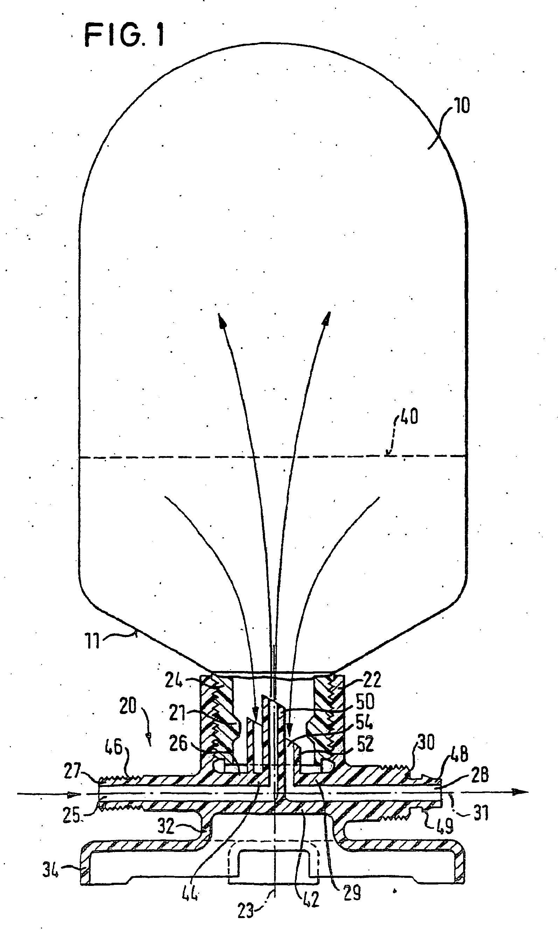

In der Ausführungsform der Erfindung gemäß Fig. 1 umfaßt die Abdichtvorrichtung einen flaschenartig geformten, druckfesten Behälter 10 aus recyclingfähigem Kunststoff, der einen nach Art eines Flaschenhalses ausgebildeten, etwa zylindrischen Anschlußabschnitt 24 aufweist, der im folgenden als Hals bezeichnet wird.

Der Hals 24 ist an seiner Außenseite mit einem Gewinde versehen, welches es gestattet, den Behälter 10 in einen ein passendes Innengewinde aufweisenden Anschlußstutzen 22 einer ebenfalls aus recyclingfähigem Kunststoff hergestellten, einstückig ausgebildeten druckfesten Entnahmeeinheit 20 derart einzuschrauben, daß der Behälterinnenraum gegenüber der Umgebung abgedichtet ist.

Der Hals 24 des Behälters 10 und der Anschlußstutzen 22 der Entnahmeeinheit 20 weisen etwa die gleiche Länge auf. An seiner Innenseite ist der Hals 24 mit einer Einschnürung 21 in Form eines radial nach innen vorstehenden, ringförmigen Wulstes versehen.

Der Behälter 10 enthält ein flüssiges Abdichtmittel, wie es beispielsweise in der deutschen Patentanmeldung 196 52 546 beschrieben ist, wobei in dem Zustand gemäß Fig. 1 der Behälter 10 zu weniger als die Hälfte mit dem Abdichtmittel gefüllt ist, wie es die den Abdichtmittelspiegel 40 andeutende gestrichelte Linie in Fig. 1 zeigt. Der Behälter 10 kann z. B. zur Aufnahme eines Volumens von 700 - 800 ml ausgelegt sein. Im Original-zustand vor seiner ersten Benutzung ist der Behälter 10 bevorzugt vollständig ohne Einschluß von Luft mit dem Abdichtmittel gefüllt, so daß keine störende Hautbildung auftreten kann. Der in Fig. 1 angedeutete Abdichtmittelspiegel 40 repräsentiert folglich einen Zwischenzustand nach Inbetriebnahme, d. h. einen bereits teilweise entleerten Behälter 10.

Der Anschlußstutzen 22 bildet ein freies Ende eines zylindrischen Anschlußabschnitts 32 der Entnahmeeinheit 20, welcher sich an seinem von dem Behälter 10 abgewandten Ende in radialer Richtung zu einem Fußabschnitt 34 erweitert. Die maximale radiale Abmessung des Fußabschnitts 34 beträgt mehr als das Zweifache des Durchmessers des Anschlußabschnitts 32, wodurch ein sicherer Stand der Abdichtvorrichtung gewährleistet ist.

Im Anschlußabschnitt 32 der Entnahmeeinheit 20 sind zwei mit Abstand voneinander angeordnete Bodenplatten 42, 44 angeordnet, die den Fußabschnitt 34 vom Anschlußstutzen 22 trennen. An der oberen Bodenplatte 44 liegt der Behälter 10 im eingeschraubten Zustand gemäß Fig. 1 mit dem eine Öffnung des Behälters 10 begrenzenden Rand des Anschlußabschnitts 24 an.

Zwischen den beiden Bodenplatten 42, 44 erstrecken sich in radialer Richtung Innenabschnitte 26, 29 einer Einlaßleitung 25 bzw. einer Auslaßleitung 28, deren untere und obere Begrenzungswand jeweils durch die untere bzw. obere Bodenplatte 42 bzw. 44 gebildet wird.

Außerhalb des Anschlußabschnitts 32 der Entnahmeeinheit 20 gehen die Innenabschnitte 26, 29 jeweils in einen Außenabschnitt 27, 30 über. Die Innenabschnitte 26, 29 und die Außenabschnitte 27, 30 liegen mit ihren Mittelachsen auf einer gemeinsamen Längsachse 31.

Der Außenabschnitt 27 der Einlaßleitung 25 ist als Gaseinlaß ausgebildet und weist im Bereich seines freien Endes ein bevorzugt als VG8-Ventilgewinde ausgebildetes Gewinde 46 zum Anschluß an eine in Fig. 1 nicht gezeigte Gasdruckquelle auf.

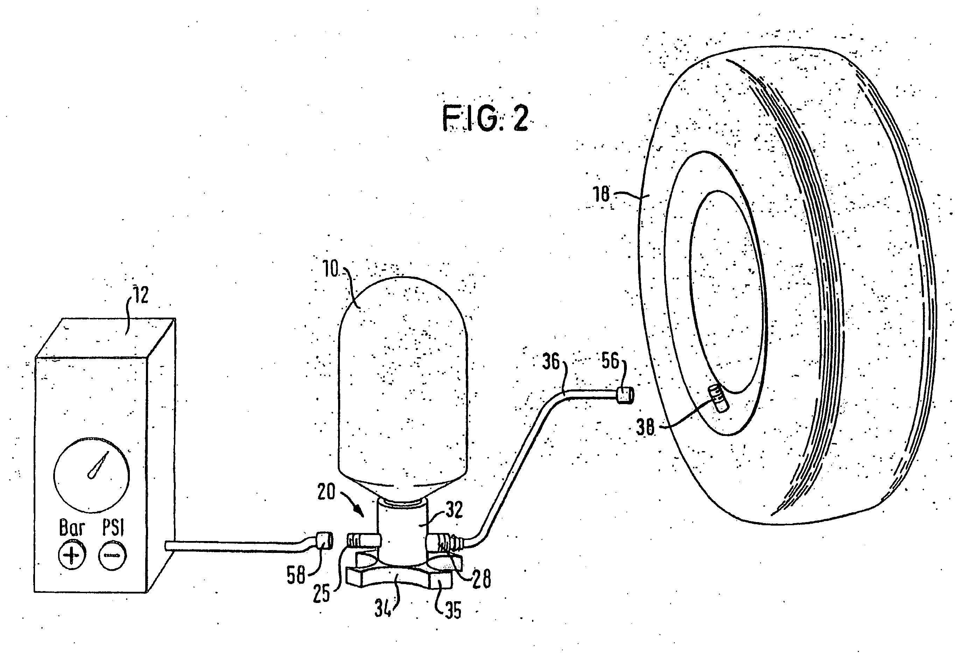

Der Außenabschnitt 30 der Auslaßleitung 28 ist mit einem Ansatz 48 reduzierten Durchmessers versehen, an dessen Außenseite hakenartige Kopplungselemente 49 angeformt sind und der zur Verbindung mit einer nachfolgend anhand von Fig. 2 näher erläuterten Fülleitung dient, über welche die Abdichtvorrichtung mit einem abzudichtenden Gegenstand verbunden werden kann.

Während die freien inneren Querschnittsflächen der Einlaßleitung 25 und der Auslaßleitung 28 gleich groß sind, weist der Außenabschnitt 30 der Auslaßleitung 28 eine größere Wandstärke auf als der Außenabschnitt 27 der Einlaßleitung 25. Abweichend von der dargestellten Ausführungsform können die freien inneren Querschnittsflächen der Einlaßleitung 25 und der Auslaßleitung 28 auch von unterschiedlicher Größe sein.

Der Innenabschnitt 26 der Einlaßleitung 25 geht in einen Einströmkanal 50 über, dessen Längsachse mit der Längsachse 23 des Anschlußstutzens 22 zusammenfällt und dessen freie innere Querschnittsfläche kleiner als diejenige des Innenabschnitts 26 ist. Der Einströmkanal 50 ragt in den Anschlußstutzen 22 der Entnahmeeinheit 20 und somit in den Hals 24 des eingeschraubten Behälters 10 hinein, wobei sich der Einströmkanal 50 jedoch nicht über das freie Ende des Anschlußstutzens 22 hinaus erstreckt.

Der Einströmkanal 50 ist bereichsweise im Inneren eines Entnahmekanals 52 der Auslaßleitung 28 angeordnet, der den Einströmkanal 50 konzentrisch umgibt, so daß der Einströmkanal 50 und der Entnahmekanal 52 ein Koaxial-Leitungssystem bilden und ein Ringraum 54 entsteht, an den der Innenabschnitt 29 der Auslaßleitung 28 angeschlossen ist. Das aus dem Entnahmekanal 52 ragende freie Ende des Einströmkanals 50 und das freie Ende des Entnahmekanals 52 ist jeweils abgeschrägt.

Der Hals 24 des Behälters 10 kann derart ausgebildet sein, daß in den Hals 24 ein als Venturidüse ausgebildetes Adapterelement eingebracht, insbesondere eingeschraubt werden kann.

Gemäß Fig. 2 ist an die Entnahmeeinheit 20 über den Ansatz 48 der Auslaßleitung 28 eine als Schlauch ausgebildete Fülleitung 36 angeschlossen, die an ihrem freien Ende mit einer zu einem VG8-Ventilgewinde passenden Überwurfmutter 56 versehen ist, um die Fülleitung 36 an einen abzudichtenden Reifen 18 anschließen zu können. Die Fülleitung 36 kann entweder lösbar oder fest mit der Entnahmeeinheit 20 verbunden sein.

Links neben der erfindungsgemäßen Abdichtvorrichtung ist in Fig. 2 schematisch eine Gasdruckquelle 12 mit einer Druckanzeige und mit Bedienelementen zur Druckregelung dargestellt, die eine Anschlußleitung aufweist; an deren freiem Ende eine der Überwurfmutter 56 entsprechende Überwurfmutter 58 zum Anschluß der Gasdruckquelle 12 an die Einlaßleitung 25 der Entnahmeeinheit 20 angeordnet ist.

Die Gasdruckquelle 12 ist bevorzugt zur Bereitstellung von Druckluft ausgebildet und kann beispielsweise als Kleinkompressor, KFZ-Zentralkompressor, stationäre Druckluftversorgungsanlage oder tragbarer Druckspeicherbehälter, wie sie beispielsweise an Tankstellen zur Verfügung stehen, oder als Hand- oder Fußluftpumpe ausgebildet sein. Der maximal von der Gasdruckquelle 12 zu erbringende Druck braucht nicht größer zu sein als der für zumindest einen Notbetrieb des Reifens 18 erforderliche Druck. Zum Entleeren des Behälters 10 braucht die Gasdruckquelle 12 keinen bestimmten Mindestdruck erbringen zu können.

Aus Fig. 2 ist zu erkennen, daß der Fußabschnitt 34 der Entnahmeeinheit 20 vier sich sternförmig in radialer Richtung vom Anschlußabschnitt 32 weg erstreckende Füße 35 umfaßt.

Die Funktionsweise der erfindungsgemäßen Abdichtvorrichtung wird im folgenden am Beispiel eines abzudichtenden Reifens 18 beschrieben.

Zunächst wird die an die Auslaßleitung 28 der Entnahmeeinheit 20 angeschlossene Fülleitung 36 an das Ventil 38 des Reifens 18 angeschlossen, indem die Überwurfmutter 56 auf das Ventilgewinde geschraubt wird. Die Gasdruckquelle 12 kann dabei bereits an die Entnahmeeinheit 20 angeschlossen oder noch von dieser getrennt sein.

Eventuell noch vorhandener Restdruck im Reifen 18 kann entweder über ein nicht dargestelltes, in der Fülleitung 36, der Entnahmeeinheit 20 oder dem Behälter 10 angeordnetes Ventil oder durch die gesamte Abdichtvorrichtung hindurch über die Einlaßleitung 25 entweichen, sofern die Gasdruckquelle 12 noch nicht angeschlossen ist. Es ist auch möglich, die Fülleitung 36 zunächst an den Reifen 18 und erst dann an die Entnahmeeinheit 20 anzuschließen, wenn der Restdruck über die Fülleitung 36 aus dem Reifen 18 entwichen ist. Wenn noch kein Behälter 10 in die Entnahmeeinheit 20 geschraubt ist, ist es auch möglich, den Restdruck im Reifen 18 direkt über den Anschlußstutzen 22 entweichen zu lassen.

In jedem Fall findet folglich eine Zwangsentlüftung des Reifens 18 statt, so daß kein Rückschlagventil erforderlich ist und insbesondere bei der Verwendung eines Kleinkompressors als Gasdruckquelle 12 ein zu hoher Anlaufstrom vermieden wird. Zum Entleeren des Behälters 10 muß die Gasdruckquelle 12 somit nicht gegen einen vom Reifen 18 aufgebrachten Gegendruck arbeiten.

Anschließend wird gegebenenfalls die Gasdruckquelle 12 an die Einlaßleitung 25 der Entnahmeeinheit 20 angeschlossen.

Falls die Entnahmeeinheit 20 nicht bereits mit einem mit Abdichtmittel gefüllten Behälter 10 versehen ist, wird vor oder nach dem Anschluß der Gasdruckquelle 12 an die Entnahmeeinheit 20 ein neuer Behälter 10 mit seinem Hals 24 in den Anschlußstutzen 22 der Entnahmeeinheit 20 geschraubt. Bevorzugt ist die Öffnung des Behälters 10 beispielsweise mittels einer Folie versiegelt, die beim Einschrauben in den Anschlußstutzen 22 durch die abgeschrägten Enden des Einströmkanals 50 und des Entnahmekanals 52 aufgebrochen wird.

Es ist auch möglich, einen als Verlängerung des Anschlußstutzens 22 oder als separates Bauteil ausgebildeten Sicherungsring vorzusehen, der beim Einschrauben des Behälters 10 nach Art von Sicherungsringen, wie sie z. B. an Deckeln von Getränkeflaschen vorhanden sind, zwischen dem Behälter 10 und der Entnahmeeinheit 20 angeordnet ist. Im Fall eines als Verlängerung des Anschlußstutzens 22 ausgebildeten Sicherungsringes kann dieser über Sollknickstellen insbesondere in Form von Filmscharnieren mit dem Anschlußstutzen 22 verbunden sein und eine geringere Wandstärke als der Anschlußstutzen 22 aufweisen.

Ein solcher Sicherungsring ist derart ausgebildet, daß er beim Einschrauben des Behälters 10 erst durch Aufbringen einer bestimmten Mindestkraft durch die als Keil wirkende Schrägschulter 11 des Behälters 10 auseinandergedrückt wird. Der Sicherungsring kann als Berstring ausgeführt sein, der durch vollständiges Einschrauben des Behälters 10 zerstört wird.

Das Vorsehen eines derartigen Sicherungsringes ermöglicht es, zur Vereinfachung der Handhabung der Abdichtvorrichtung den Behälter 10 im Rahmen einer Vormontage zunächst nur lose gegen den Sicherungsring zu schrauben, wobei dieser sich im Vormontäge-Zustand an der Schrägschulter 11 des Behälters 10 abstützt. Eine einzige Gewindedrehung reicht dabei aus, um den Behälter 10 verliersicher an der Entnahmeeinheit 20 zu halten.

In diesem Vormontage-Zustand ist die die Öffnung des Behälters 10 versiegelnde Folie noch unversehrt, so daß kein Abdichtmittel auslaufen kann. Nur durch Überwinden des durch den Sicherungsring dem Behälter 10 entgegengebrachten Widerstandes kann die Folie durch die abgeschrägten Enden des Einströmkanals 50 und des Entnahmekanals 52 aufgebrochen werden.

Um zu verhindern, daß vor Inbetriebnahme der Anordnung Abdichtmittel über die Einlaßleitung 25 aus der Entnahmeeinheit 20 herausläuft, kann beispielsweise in der Einlaßleitung 25 eine Absperrvorrichtung vorgesehen sein oder der Behälter 10 im aufrechtstehenden Zustand mit der Entnahmeeinheit 20 verschraubt werden.

Zum Einbringen von Abdichtmittel in den Reifen 18 wird die erfindungsgemäße Abdichtvorrichtung mit der Entnahmeeinheit 20 auf den Boden gestellt, wie es in Fig. 2 gezeigt ist, so daß der Behälter 10 mit seiner Öffnung nach unten angeordnet ist.

Nach Aktivierung der Gasdruckquelle 12 strömt das Gas gemäß dem in Fig. 1 durch Pfeile angedeuteten Verlauf über die Einlaßleitung 25 und deren von Abdichtmittel umgebenem Einströmkanal 50 in den Behälter 10 und durch das Abdichtmittel hindurch in den Bereich oberhalb des Abdichtmittelspiegels 40. Das in diesem Bereich unter sich erhöhendem Druck stehende Gas drückt das Abdichtmittel über den vom Einströmkanal 50 und vom Entnahmekanal 52 gebildeten Ringraum 54 der Auslaßleitung 28 durch die Fülleitung 36 in den Reifen 18. Die im Hals 24 bei der Herstellung bevorzugt in einem Arbeitsgang mit dem Behälter 10 ausgebildete Einschnürung 21 ist derart ausgestaltet, daß sie sich dabei vorteilhaft auf den Verlauf der Strömung des Abdichtmittels auswirkt.

Auch im Fall eines vollständig und ohne Lufteinschluß gefüllten Behälters 10 wird das Abdichtmittel aufgrund der durch das in den Behälter 10 strömende Gas verursachten Druckerhöhung über den Entnahmekanal 52 aus dem Behälter 10 getrieben.

Wenn die zur Behebung des Reifenlecks erforderliche Abdichtmittelmenge in den Reifen 18 eingebracht worden und noch eine Restmenge an Abdichtmittel im Behälter 10 vorhanden ist, wird die erfindungsgemäße Abdichtvorrichtung um 180° gedreht und auf den Kopf gestellt. Hierzu kann abweichend von der in den Fig. 1 und 2 dargestellten Ausführungsform die von der Entnahmeeinheit 20 abgewandte Bodenseite des Behälters 10 als Standfläche ausgebildet sein.

Das Abdichtmittel sammelt sich nunmehr an der von der Entnahmeeinheit 20 abgewandten Seite des Behälters 10 im Bereich des Behälterbodens, so daß das weiterhin durch die Einlaßleitung 25 in den Behälter 10 strömende Gas direkt in die Auslaßleitung 28 und in den Reifen 18 strömt. Auf diese Weise kann der Reifen 18 unmittelbar im Anschluß an das Einbringen des Abdichtmittels auf seinen Betriebsdruck oder zumindest auf einen Druck aufgepumpt werden, bei dem das betreffende Fahrzeug eine gewisse Strecke gefahren werden kann.

Indem die Abdichtvorrichtung erneut gedreht und wieder mit der Entnahmeeinheit 20 nach unten auf den Boden gestellt wird, können mit dem im Behälter 10 verbliebenen Abdichtmittel gegebenenfalls weitere beschädigte Reifen entsprechend der vorstehend beschriebenen Vorgehensweise abgedichtet werden.

Um während oder nach Abschluß der Benutzung einen im Behälter 10 herrschenden Restdruck abbauen zu können, kann in der Behälterwand ein in Fig. 1 und 2 nicht dargestelltes Ventil vorgesehen sein. Dieses kann gemäß einer besonders einfachen Ausführung als eine Entlastungsbohrung mit einem Durchmesser von z. B. 0,5 mm ausgeführt sein, die in der unteren Bodenplatte 42 ausgebildet ist und in die Einlaßleitung 25 mündet.

Zur Anpassung an unterschiedliche Einsatzbedingungen können verschiedene Adapterelemente in Verbindung mit der Einlaßleitung 25, der Auslaßleitung 28 und/oder der Fülleitung 36 sowie Fülleitungen 36 unterschiedlicher Länge verwehdet werden.

Des weiteren kann die Entnahmeeinheit 20 in vorteilhafter Weise mit unterschiedlichen Behältern 10 kombiniert werden, die sich hinsichtlich ihrer Form, ihrer Größe und/oder des enthaltenen Abdichtmittels unterscheiden können.

Insbesondere im Hinblick auf die von vorbeifahrenden Fahrzeugen ausgehende Gefahr für den Benutzer bei Reifenpannen besteht ein Vorteil der erfindungsgemäßen Abdichtvorrichtung darin, daß sich der Benutzer lediglich zum Anschließen der Fülleitung 36 an das Ventil 38 in unmittelbarer Nähe des Reifens 18 'aufhalten muß. Die Bedienung der Gasdruckquelle 12, das Einschrauben des Behälters 10, das Umdrehen der Abdichtvorrichtung sowie die Überwachung des Abdicht- und Aufpumpvorgangs über die Anzeige der Gasdruckquelle 12 kann dann an einer vom abzudichtenden Reifen entfernten, sicheren Stelle erfolgen.

## Patentansprüche

1. Entnahmeeinheit (20) mit einem ein Abdichtmittel enthaltenden Behälter für eine Vorrichtung zum Abdichten aufblasbarer Gegenstände, insbesondere Reifen,
wobei an der Entnahmeeinheit (20) ein an eine Gasdruckquelle (12) anschließbarer Gaseinlass und ein mit einem abzudichtenden Gegenstand (18) koppelbarer Auslass ausgebildet sind, **dadurch gekennzeichnet,**
**dass** die Entnahmeeinheit (20) lösbar mit dem ein Abdichtmittel enthaltenden Behälter (10) derart verbindbar, bevorzugt verschraubbar, ist, dass im verbundenen Zustand der Gaseinlass und der Auslass der Entnahmeeinheit (20) über den Behältennnenraum miteinander in Verbindung stehen und das Gas von der Gasdruckquelle durch das Abdichtmittel hindurch in den Bereich oberhalb des Abdichtmittelspiegels strömt und das Abdichtmittel zum Gasauslass drückt, und
**dass** die Entnahmeeinheit (20) auf ihrer im verbundenen Zustand vom Behälter (10) abgewandten Seite mit einer Standfläche versehen ist.

2. Entnahmeeinheit nach Anspruch 1,
**dadurch gekennzeichnet,**
**dass** die Entnahmeeinheit (20) für den insbesondere flaschenförmigen Behälter (10), bevorzugt zur Aufnahme eines flaschenhalsartigen Anschlussabschnitts (24) des Behälters (10), wenigstens einen im wesentlichen zylindrischen Anschlussstutzen (22) aufweist.

3. Entnahmeeinheit nach Anspruch 1 oder 2,
**dadurch gekennzeichnet,**
**dass** die Entnahmeeinheit (20) eine Einlassleitung (25) und eine Auslassleitung (28) aufweist, die jeweils einen in den Behälter (10) hineinragenden Innenabschnitt (26, 29) und einen Außenabschnitt (27, 30) umfassen, an denen der Gaseinlass bzw. der Auslass ausgebildet ist, wobei bevorzugt die Innenabschnitte (26, 29) etwa parallel und die Außenabschnitte (27, 30) etwa senkrecht zu einer Längsachse (23) eines Anschlussstutzens (22) der Entnahmeeinheit (20) verlaufen.

4. Entnahmeeinheit nach Anspruch 3,
**dadurch gekennzeichnet,**
**dass** die Einlassleitung (25) und die Auslassleitung (28) jeweils im Bereich ihres mit dem Behälterinnenraum kommunizierenden freien Endes innerhalb eines Anschlussstutzens (22) der Entnahmeeinheit (20) verlaufen.

5. Entnahmeeinheit nach Anspruch 4,
**dadurch gekennzeichnet,**
**dass** sich die freien Enden der Einlassleitung (25) und der Auslassleitung (28) jeweils nicht über das freie Ende des Anschlussstutzens (22) der Entnahmeeinheit (20) hinaus erstrecken.

6. Entnahmeeinheit nach einem der Ansprüche 3 bis 5,
**dadurch gekennzeichnet,**
**dass** die Einlassleitung (25) und die Auslassleitung (28) zumindest bereichsweise, bevorzugt im Bereich von mit dem Behälterinnenraum kommunizierenden freien Enden, koaxial verlaufen.

7. Entnahmeeinheit nach einem der Ansprüche 3 bis 6,
**dadurch gekennzeichnet,**
**dass** freie Enden der Einlassleitung (25) und/oder der Aüslassleitung (28) jeweils zum Aufbrechen einer eine Öffnung des Behälters (10) verschließenden Versiegelung ausgebildet, insbesondere abgeschrägt sind.

8. Entnahmeeinheit nach einem der vorhergehenden Ansprüche,
**dadurch gekennzeichnet,**
**dass** die Entnahmeeinheit (20) einen zumindest im wesentlichen zylindrischen Anschlussabschnitt (32) umfaßt, der an seinem einen Ende als Anschlussstutzen (22) für den Behälter (10) ausgebildet ist und an dessen anderes Ende sich ein Fußabschnitt (34) anschließt, dessen vom Behälter (10) abgewandte Seite als die Standfläche ausgebildet ist.

9. Entnahmeeinheit nach einem der vorhergehenden Ansprüche,
**dadurch gekennzeichnet,**
**dass** an einen Außenabschnitt (30) einer Auslassleitung (28) der Entnahmeeinheit (20) eine bevorzugt als Schlauch ausgebildete Füllleitung (36) anschließbar ist, die mit einem Ventil (38) des abzudichtenden Gegenstandes (18) koppelbar ist.

10. Entnahmeeinheit nach einem der vorhergehenden Ansprüche,
**dadurch gekennzeichnet,**
**dass** sie aus einem vorzugsweise recyclingfähigen Kunststoff hergestellt ist.

11. Vorrichtung zum Abdichten aufblasbarer Gegenstände, insbesondere Reifen, mit einer Gasdruckquelle (12) und einem ein Abdichtmittel enthaltenden Behälter (10), der einen an die Gasdruckquelle (12) anschließbaren Gaseinlass und einen mit einem abzudichtenden Gegenstand ( 18) koppelbaren Auslass aufweist, wobei der Gaseinlass und der Auslass über den Behälterinnenraum miteinander in Verbindung stehen,
**gekennzeichnet durch**
eine lösbar mit dem Behälter (10) verbundene Entnahmeeinheit (20) nach einem der vorhergehenden Ansprüche.

12. Vorrichtung nach Anspruch 11,
**dadurch gekennzeichnet,**
**dass** der Behälter (10) aus einem vorzugsweise recyclingfähigen Kunststoff hergestellt ist.

13. Vorrichtung nach Anspruch 11 oder 12,
**dadurch gekennzeichnet,**
**dass** sie zur Zwangsentlüftung eines an den Auslass insbesondere über eine Füllleitung (36) angeschlossenen abzudichtenden Gegenstandes (18) ausgebildet ist.

14. Vorrichtung nach einem der Ansprüche 11 bis 13,
**dadurch gekennzeichnet,**
**dass** ein in der DE-A-196 525 46 beschriebenes Abdichtmittel vorgesehen ist.

## Claims

1. Extraction unit (20) comprising a container containing a sealant for an apparatus for the sealing of inflatable articles, in particular tyres, wherein a gas inlet (12) which can be connected to a gas pressure source (12) and an outlet which can be coupled to an article (18) to be sealed are formed at the extraction unit (20), **characterised in that** the extraction unit (20) can be releasably connected, preferably screwed, to the container (10) containing a sealant such that the gas inlet and the outlet of the extraction unit (20) are in communication with one another via the internal space of the container in the connected state and the gas flows from the gas pressure source through the sealant into the region above the sealant level and presses the sealant to the gas outlet; and **in that** the extraction unit (20) is provided with a standing surface at its side remote from the container (10) in the connected state.

2. Extraction unit in accordance with claim 1, **characterised in that** the extraction unit (20) has at least one substantially cylindrical connection stub (22) for the in particular bottle-like container (10), preferably for receiving a connection section (24) of the container (10) in bottleneck form.

3. Extraction unit in accordance with claim 1 or claim 2, **characterised in that** the extraction unit (20) has an inlet duct (25) and an outlet duct (28) which respectively include an inner section (26, 29) projecting into the container (10) and an outer section (27, 30) at which the gas inlet and the outlet are respectively formed, with the inner sections (26, 29) preferably extending approximately parallel to a longitudinal axis (23) of a connection stub (22) of the extraction unit (20) and the outer sections (27, 30) preferably extending approximately perpendicular to a longitudinal axis (23) of the connection stub (22) of the extraction unit (20).

4. Extraction unit in accordance with claim 3, **characterised, in that** the inlet duct (25) and the outlet duct (28) respectively extend, in the region of their free ends communicating with the interior space of the container, within a connection stub (22) of the extraction unit (20).

5. Extraction unit in accordance with claim 4 **characterised, in that** the free ends of the inlet duct (25) and of the outlet duct (28) each do not extend beyond the free end of the connection stub (22) of the extraction unit (20).

6. Extraction unit in accordance with any one of claims 3 to 5, **characterised in that** the inlet duct (25) and the outlet duct (28) extend coaxially, at least regionally, preferably in the region of free ends communicating with the interior space of the container.

7. Extraction unit in accordance with any one of claims 3 to 6, **characterised in that** free ends of the inlet duct (25) and/or of the outlet duct (28) are each formed, in particular chamfered, to break open a seal closing off an opening of the container (10).

8. Extraction unit in accordance with any one of the preceding claims, **characterised in that** the extraction unit (20) includes an at least substantially cylindrical connection section (32), which is formed at its one end as a connection stub (22) for the container (10), and whose other end is adjoined by a pedestal section (34) whose side remote from the container (10) is formed as a standing surface.

9. Extraction unit in accordance with any one of the preceding claims, **characterised in that** a filling line (36), which is preferably formed as a hose, can be connected to an outer section (30) of an outlet duct (28) of the extraction unit (20) and can be coupled to a valve (38) of the article (18) to be sealed.

10. Extraction unit in accordance with any one of the preceding claims, **characterised in that** it is manufactured from a plastic, preferably a recyclable plastic.

11. Apparatus for the sealing of inflatable articles, in particular tyres, comprising a gas pressure source (12) and a container (10) containing a sealant and having a gas inlet which can be connected to the gas pressure source (12) and an outlet which can be coupled to an article (18) to be sealed, with the gas inlet and the outlet communicating with one another via the internal space of the container, **characterised by** an extraction unit (20) in accordance with any one of the preceding claims and releasably connected to the container (10).

12. Apparatus in accordance with claim 11, **characterised in that** the container (10) is manufactured from a plastic, preferably a recyclable plastic.

13. Apparatus in accordance with claim 11 or claim 12, **characterised in that** it is made for the forced venting of an article (18) to be sealed in particular connected via a filling line (36).

14. Apparatus in accordance with any one of claims 11 to 13, **characterised in that** a sealant described in DE-A-196 525 46 is used.

## Revendications

1. Unité de prélèvement (20) comportant un récipient contenant un milieu d'étanchéité pour un dispositif servant à étanchéifier des objets pouvant être gonflés, notamment des pneumatiques,
où sur l'unité de prélèvement (20) sont formées une entrée pour le gaz, raccordée à une source de gaz comprimé (12), et une sortie pouvant être couplée à un objet à étanchéifier (18), **caractérisée en ce**
**que** l'unité de prélèvement (20) peut être reliée de façon amovible et de préférence par vissage, au récipient (10) contenant un milieu d'étanchéité, qu'à l'état réuni, l'entrée pour le gaz et la sortie de l'unité de prélèvement (20) sont reliées entre elles par l'intermédiaire de l'espace intérieur du récipient, et en ce
**que** sur son côté tourné à l'opposé du récipient (10), à l'état réuni, l'unité de prélèvement (20) est pourvue d'une surface d'appui.

2. Unité de prélèvement selon la revendication 1,
**caractérisée en ce**
**que** l'unité de prélèvement (20) comporte, pour le récipient (10) notamment en forme de bouteille, de préférence pour recevoir une section de raccordement (24) en forme de goulot de bouteille du récipient (10), au moins un embout de raccordement essentiellement cylindrique (22).

3. Unité de prélèvement selon la revendication 1
ou 2, **caractérisée en ce**
**que** l'unité de prélèvement (20) comporte une canalisation d'entrée (25) et une canalisation de sortie (28), qui comprennent respectivement une section intérieure (26, 29) pénétrant dans le récipient (10) et une section extérieure (27, 30), sections sur lesquelles sont formées l'entrée pour le gaz et la sortie, et de préférence les sections intérieures (26, 29) s'étendent approximativement parallèlement et les sections extérieures (27, 30) approximativement perpendiculairement à un axe longitudinal (23) d'une tubulure de raccordement (22) de l'unité de prélèvement (20).

4. Unité de prélèvement selon la revendication 3,
**caractérisée en ce**
**que** la canalisation d'entrée (25) et la canalisation de sortie (28) s'étendent respectivement dans la zone de leur extrémité libre communiquant avec l'espace intérieur du récipient, à l'intérieur d'une tubulure de raccordement (22) de l'unité de prélèvement (20).

5. Unité de prélèvement selon la revendication 4,
**caractérisée en ce**
**que** les extrémités libres de la canalisation d'entrée (25) et de la canalisation de sortie (28) ne s'étendent chacune pas au-delà de l'extrémité libre de la tubulure de raccordement (22) de l'unité de prélèvement (20).

6. Unité de prélèvement selon l'une des revendications 3 à 5, **caractérisée en ce**
**que** la canalisation d'entrée (25) et la canalisation de sortie (28) s'étendent coaxialement au moins par endroits, de préférence dans la zone d'extrémités libres communiquant avec l'espace intérieur du récipient.

7. Unité de prélèvement selon l'une des revendications 3 à 6, **caractérisée en ce**
**que** les extrémités libres de la canalisation d'entrée (25) et/ou de la canalisation de sortie (28) sont agencées respectivement de manière à interrompre un scellement qui ferme une ouverture de récipient (10), et notamment sont biseautées.

8. Unité de prélèvement selon l'une des revendications précédentes, **caractérisée en ce**
**que** l'unité de prélèvement (20) comprend une section de raccordement (32) au moins essentiellement cylindrique, qui est agencée, au niveau de l'une de ses extrémités, sous la forme d'un embout de raccordement (22) pour le récipient (10) et à l'autre extrémité de laquelle se raccorde une section formant pied (34), dont le côté, tourné à l'opposé du récipient (10) est agencée sous la forme d'une surface d'appui.

9. Unité de prélèvement selon l'une des revendications précédentes, **caractérisée en ce**
**qu'**à une section extérieure (30) d'une canalisation de sortie (28) de l'unité de prélèvement (20) peut être raccordée une canalisation de remplissage (36) agencée de préférence sous la forme d'un tuyau et qui peut être couplée à une soupape (38) de l'objet devant être étanchéifié (18).

10. Unité de prélèvement selon l'une des revendications précédentes, **caractérisée en ce**
**qu'**elle est constituée par une matière plastique de préférence recyclable.

11. Dispositif pour étanchéifier des objets pouvant être gonflés, notamment des pneumatiques, comportant une source de gaz comprimé (12) et un récipient (10) contenant un milieu d'étanchéité et qui comporte une entrée pour le gaz, pouvant être raccordée à la source de gaz comprimé (12) et une partie pouvant être couplée à un objet (18) devant être étanchéifié, l'entrée pour le gaz et la sortie étant reliées entre elles par l'intermédiaire de l'espace intérieur du récipient,
**caractérisé par**
une unité de prélèvement (20), reliée de façon amovible au récipient (10), selon l'une des revendications précédentes.

12. Dispositif selon la revendication 11,
**caractérisé en ce**
**que** le récipient (10) est réalisé en une matière plastique de préférence recyclable.

13. Dispositif selon la revendication 11 ou 12,
**caractérisé en ce**
**qu'**il est agencé pour la désaération forcée d'un objet (18) devant être fermé de façon étanche, raccordé à la sortie notamment par l'intermédiaire d'une canalisation de remplissage (36).

14. Dispositif selon l'une des revendications 11 à 13, **caractérisé en ce**
**qu'**il est prévu un milieu d'étanchéité décrit dans DE-A-196 525 46.
